# EUROPÄISCHE PATENTSCHRIFT

(11) **EP 3 428 051 B1**
(45) Veröffentlichungstag und Bekanntmachung des Hinweises auf die Patenterteilung: **14.01.2026**
(21) Anmeldenummer: 18181651.3
(22) Anmeldetag: 04.07.2018
(51) Int. Cl.: B62M 6/40, B62M 6/90, B62K 19/40, B62K 19/16, B62J 99/00

(54) **FAHRRADRAHMEN FÜR ELEKTROFAHRRÄDER UND ELEKTROFAHRRAD HIERMIT**
BICYCLE FRAME FOR ELECTRIC BICYCLES AND ELECTRIC BICYCLE WITH SUCH A FRAME
CADRE DE VÉLO ÉLECTRIQUE ET VÉLO ÉLECTRIQUE CORRESPONDANT

(30) Priorität: 14.07.2017 DE 202017104230 U
(43) Veröffentlichungstag der Anmeldung: 16.01.2019
(73) Patentinhaber: ZEG Zweirad-Einkaufs-Genossenschaft eG, 50739 Köln (DE)
(72) Erfinder: Gehring, Hendrik, 51429 Bergisch Gladbach (DE); Mühle, Sören, 50733 Köln (DE)
(74) Vertreter: Patentanwälte Buschhoff Hennicke Althaus

(56) Entgegenhaltungen:
- CN-A- 106 697 152
- CN-U- 202 272 136
- CN-U- 202 728 446
- DE-A1- 19 712 326
- US-A1- 2012 261 897
- US-A1- 2013 147 153

## Beschreibung

Die Erfindung betrifft einen Fahrradrahmen für Elektrofahrräder, mit mehreren Rahmenstreben, die zumindest ein Unterrohr, ein Sattelrohr und ein Lenkkopfrohr des Fahrradrahmens bilden, mit einer Halteeinrichtung für einen Elektromotor, mit wenigstens einer Aufnahme zur lösbaren Anordnung einer Energieversorgungseinheit für den Elektromotor am Fahrradrahmen, wobei das Sattelrohr einen Außenumfang und innerhalb des Außenumfangs eine Einschiebeöffnung für eine Sattelstütze aufweist, und wobei wenigstens eine Rahmenstrebe eine in die Rahmenstrebe integrierte Kammer als Kabelführungskanal aufweist. Die Erfindung betrifft auch ein Elektrofahrrad mit einem entsprechenden Fahrradrahmen.

Bei einem Elektrofahrrad müssen zusätzlich zu den auch bei einem nicht motorisierten Fahrrad benötigten Fahrradkomponenten mindestens ein Elektromotor, eine wiederaufladbare Energieversorgungseinheit sowie eine im Regelfall ein Display aufweisende elektronische Steuereinheit am Fahrradrahmen befestigt oder untergebracht werden. Hierbei bestehen Bestrebungen, insbesondere die wiederaufladbare Energieversorgungseinheit und deren Riegelmechanismus, aber auch das Display, derart in den Fahrradrahmen zu integrieren, dass so wenig wie möglich zu erkennen ist, dass es sich tatsächlich um ein Elektrofahrrad handelt. Die EP 2230164 A1 beispielsweise offenbart einen Fahrradrahmen für ein Elektrofahrrad mit einer in das Unterrohr integrierten Energieversorgungseinheit, die über eine Seitenöffnung in eine Kammer im Unterrohr eingeschwenkt wird, wobei die Seitenöffnung mittels eines Verschlussdeckels verschlossen wird, sodass die Energieversorgungseinheit am Elektrofahrrad nicht erkennbar ist. Die EP 3118096 A1 offenbart einen Fahrradrahmen mit einer nach unten offenen Aufnahmevertiefung für die Energieversorgungseinheit, wobei der Ladezustand der Energieversorgungseinheit durch ein Fenster im Unterrohr erkennbar ist.

Während es anfänglich üblich war, die Energieversorgungseinheit zum Aufladen aus dem Fahrradrahmen des Elektrofahrrads auszubauen, wird zur Steigerung des Bedienungskomforts bei neueren Elektrofahrrädern ein Ladeanschluss in Form einer Ladebuchse vorgesehen, die mit einer externen Ladestation verbunden werden kann und eine elektrische Aufladung der Energieversorgungseinheit beispielsweise auch an öffentlichen Ladestationen ermöglicht. Die DE 10 2013 204 458 A1 offenbart einen Fahrradrahmen mit im Unterrohr integrierter Energieversorgungseinheit und einer benachbart hierzu im Unterrohr angeordneten, mit einer Abdeckung verschließbaren Ladebuchse als Ladeanschluss. Damit die aus Kunststoff bestehende Abdeckung die Ladebuchse während der Fahrt vor Umgebungseinflüssen sicher schützt und während des Ladevorgangs nicht verloren geht, ist sie mit Magneten versehen, welche in der Schließstellung mit magnetisierten Vorsprüngen am Boden der Ladebuchse zusammenwirken und in einer Aufbewahrungsstellung mit einem Magneten zusammenwirken, der am seitlichen Gehäuse der Ladebuchse angeordnet ist und im Innern des Unterrohrs angeordnet ist. Da die Ladebuchse nahe der Energieversorgungseinheit angeordnet ist, kann ein elektrisches Verbindungskabel intern im Unterrohr verlegt werden.

Die Displays, über welche der Betriebszustand der Energieversorgungseinheit sowie die Betriebsparameter des Elektromotors angezeigt und meist über Bedienknöpfe auch verstellt werden können, werden bei modernen Elektrofahrrädern in Halterungen eingeschoben, die am Lenker oder am Vorbau angeordnet oder in diesen integriert sind (vgl. DE 20 2016 005 281 U).

Die Kabelführung für die elektrischen Verbindungskabel zum Ladeanschluss, gegebenenfalls auch für Versorgungskabel für Frontlicht oder Rücklicht, erfolgt in der die Energieversorgungseinheit integral aufnehmenden Rahmenstrebe intern, tritt dann aber an deren Ende über einen Austritt aus und geht offen verlegt zum Display oder zum Licht (vergleiche Z.B 10 2013 204 557).

Aus der US 2013/0147153 A1 ist es bekannt, die elektrische Batterien integriert innerhalb eines Sattelrohrs eines Fahrrades aufzunehmen. Um die Batterie sicher innerhalb des Sattelrohrs zu fixieren, wird in den offenen Querschnitt des Sattelrohrs ein aus 2 Halbschalen bestehendes Halteelement eingeschoben, welches im montierten Zustand zwei voneinander getrennte, parallel zur Rohrachse verlaufende Kanalöffnungen bildet, nämlich eine erste Kanalöffnung, in die die Batterie eingeklemmt werden kann, und eine zweite Kanalöffnung, durch die ein Kabel hindurchgeführt werden kann. Das Halteteil muss derart tief in das Sattelrohr eingeschoben werden, dass die Sattesltütze des Sattels oberhalb des Halteteils positioniert werden kann. Dieses Dokument offenbart die Merkmale der Präambel des Anspruchs 1.

Aus der CN 202728446 U ist ein Elektrofahrrad mit einem Fahrradrahmen bekannt, bei welchem eine kastenförmige Batterie in eine rechteckförmige Öffnung des insgesamt rechteckförmigen Unterrohr eingeschoben wird. Die Bremsleitung für das Hinterrad kann ebenfalls durch die Öffnung im Unterrohr verlegt werden, wozu in die Öffnung ein Kunststoffblech eingeschoben ist, welches eine Leitungskanal von der Aufnahmeöffnung für die Batterie trennt.

Aus der CN 202272136 U ist ein Fahrradrahmen bekannt, bei welchem am Lenkkopfrohr ein interner Kabelkanal zur Verlegung von Leitungen ausgebildet ist. Zusätzlich kann auch der Lenkerschaft bzw. der gesamte Lenkervorbau mit einem internen Kabelkanal versehen sein. Vom Lenkkopfrohr aus kann ein Kabel auch intern durch das Unterrohr zum Hinterrad geführt werden.

Aus der CN 10669752 A ist es bekannt, am Lenkkopfrohr einen oder mehrere seitliche Kabelführungskanal integral am Außenumfang des Lenkkopfrohr zur internen Kabelverlegung auszubilden.

Aus der US 2012/0261897 A1 ist ein Fahrradrahmen bekannt, der mit Hohlräumen derart ausgebildet ist, dass in den Hohlräumen Schläuche zur Kabelführung angeordnet werden können. Die Schläuche sind intern im hohlen Fahrradrahmen verlegt. Das Oberrohr kann mit einer Öffnung versehen sein, um die Leitungen in den Hohlraum hinein zu führen.

Aufgabe der Erfindung ist es, ausgehend von diesem Stand der Technik einen Fahrradrahmen für Elektrofahrräder zu schaffen, der montage-und bedienerfreundlich konstruiert ist, die Integration sämtlicher für ein Elektrofahrrad benötigten Komponenten konsequent fortsetzt und insbesondere die elektrischen Komponenten und deren elektrische Verbindungen noch besser vor Umwelteinflüssen schützt.

Zur Lösung dieser Aufgabe wird ein Elektrofahrrad gemäß Patentanspruch 1 vorgeschlagen. Vorteilhafte Ausgestaltungen sind in den Unteransprüchen angegeben. Erfindungsgemäß hat das Elektrofahrrad einen Fahrradrahmen, bei welchem das Sattelrohr eine am Außenumfang geschlossene Kammer als Kabelführungskanal für wenigstens ein Elektrokabel aufweist, wobei der Kabelführungskanal mit einem sich entlang des Einschubraums für die Sattelstütze erstreckenden offenen Durchgang zum Einschubraum versehen ist, und das Elektrokabel mit einem Stecker versehen ist. Der in das Sattelrohr integrierte, außen geschlossene Kabelführungskanal ermöglicht eine vollständig geschützte Verlegung sämtlicher Elektrokabel einschließlich Lichtkabel von einer beispielsweise im Unterrohr integral angeordneten Energieversorgungseinheit zu einem möglichst hoch am Fahrradrahmen bzw. Fahrrad positionierten Rücklicht. Da der Kabelkanal zum Einschubraum für das Sattelrohr offen ist, kann ein mit Stecker werkseitig vorkonfektioniertes Kabel jederzeit verlegt oder ausgetauscht werden, ohne dass der Stecker demontiert werden muss. Gleichzeitig kann der Benutzer die Sitzhöhe des Sattels durch Verschieben der Sattelstange im Sattelrohr verändern, ohne dass das elektrische Kabel beschädigt wird. Bei der erfindungsgemäßen Lösung kann das elektrische Kabel, welches als Elektrokabel ein Versorgungskabel bilden kann, bereits werksseitig mit wenigstens einem Stecker versehen sein, dessen Querschnitt größer ist als der Querschnitt der den Kabelführungskanal bildenden Kammer im Sattelrohr, wobei das elektrische Kabel bzw. Versorgungskabel wenigstens in einer Richtung eine Dicke hat, die kleiner ist als die lichte Breite des Durchgangs.

Das oder die Kabel könnten in der Kammer aufgrund ihrer Kabelquerschnittsform gehalten werden. Vorzugsweise ist hingegen vorgesehen, dass der offenen Durchgang mit einem demontierbaren, ein- oder mehrteiligen Schließelement, insbesondere mit einer Schiene, verschließbar oder verschlossenen ist. Die Position der Kammer relativ zu der Einschiebeöffnung für die Sattelstange ist am Sattelrohr zwar grundsätzlich frei wählbar, bei der insbesondere bevorzugten Ausgestaltung ist allerdings der Außenumfang des Sattelrohrs an der vom Lenckopfrohr abgewandt liegenden Rückseite mit einer Ausbuchtung oder Verdickung versehen, in der die Kammer als integrierter Bestandteil des Sattelrohrs angeordnet und ausgebildet ist. In der Kammer im Sattelrohr ist vorzugsweise mindestens ein elektrisches Versorgungskabel für ein Rücklicht und/oder ein eine Ladebuchse mit der Energieversorgungseinheit verbindendes Versorgungskabel verlegt.

Bei einer besonders vorteilhaften Ausgestaltung besteht das Sattelrohr aus einem Profil, insbesondere Stranggussprofil, mit eiförmigem Außenumfang, welcher von einem in Fahrtrichtung weisenden Halbkreisabschnitt und einem rückseitigen Parabelabschnitt gebildet ist. Die den Kabelführungskanal bildende Kammer ist dabei vorzugsweise im rückseitigen Parabelabschnitt ausgebildet.

Die Kammer kann aus einer Längsnut bestehen, wobei vorzugsweise die Längsnut zwei einander im Wesentlichen parallel gegenüberliegende Seitenwände und eine diese verbindende Rückwand aufweist und die beiden Seitenwände der Längsnut im Abstand von der Rückwand und im Abstand von der Einschiebeöffnung mit Schlitzeinziehungen versehen sind, in die ein Schließelement vom oberen Ende des Sattelrohr her einschiebbar ist. Die Kammer kann auch einen gegenüber dem Durchgang hinterschnittenen Kammerabschnitt aufweisen, dessen Seitenwände einen größeren Abstand voneinander aufweisen als die den Durchgang seitlich begrenzenden Wandabschnitte, wobei vorzugweise die Schlitzeinziehungen für das Schließelement angrenzend an den Durchgang ausgebildet sind. Die Übergänge von der Begrenzungswandung der Einschiebeöffnung in die Seitenwände, die Übergänge von den Seitenwänden zu den Schlitzeinziehungen und die Übergänge von den Seitenwänden in die Rückwand sind vorzugsweise gerundet ausgebildet. Zweckmäßigerweise ist ein oberer Abschnitt des Sattelrohrs mit der Kammer derart abgetragen, beispielsweise abgefräst oder abgedreht, dass das Sattelrohr im oberen Abschnitt einen Klemmbereich für eine Sattelklemme bildet, und vorzugsweise einen runden, die Einschiebeöffnung unmittelbar umgebenden, den Durchbruch als offenen Längsschlitz aufweisenden Außenumfangsabschnitt aufweist.

Das Sattelrohr mit integrierter Kammer für ein Elektrokabel bietet insbesondere dann Vorteile, wenn eine Ladebuchse für die Energieversorgungseinheit rückseitig des Sattelrohrs am Hinterbau zwischen Sattelrohr und Sitzstreben angeordnet ist, da dann das die Ladebuchse mit der Energieversorgungseinheit verbindende elektrische Versorgungskabel durch die Kammer des Sattelrohrs verlegt werden kann, und insbesondere auch dann, wenn das Versorgungskabel werkseitig mit einem Stecker, oder einer elektrischen Komponente der Ladebuchse, versehen ist. Die Position der Ladebuchse am Hinterbau bietet für den Benutzer eine erhebliche Komfortverbesserung, da das Öffnen und Anschließen der Energieversorgungseinheit über die Ladebuchse an eine Ladestation bequem im Stand ohne Bücken durchgeführt werden kann.

Bei Fahrradrahmen für Elektrofahrräder, bei denen das Oberrohr beabstandet vom Unterrohr am Steuerrohr befestigt ist, kann das Steuerrohr eine am Außenumfang geschlossene Kammer als Kabelführungskanal zwischen Unterrohr und Oberrohr aufweisen. Auch hier könnte es sich bei der Kammer um eine integrale Kammer in einem zwei voneinander getrennte Kammern aufweisenden Mehrkammerrohr handeln, vorzugsweise ist jedoch an der Außenwand eines das Lenkkopfrohr bildenden Rundrohrs ein hohles Aufsatzteil angeschweißt, um die Kammer für den Kabelführungskanal zu bilden. Der Kabelführungskanal am Lenkkopfrohr bietet insbesondere Vorteile, wenn ein zwischen Lenkkopfrohr und Sattelrohr verlaufendes Oberrohr integral mit einer Aufnahme für ein mit der Motorsteuerung über ein Kabel verbundenes Display versehen wird, da dann das Kabel intern im Fahrradrahmen durch den Kabelführungskanal am Lenkkopfrohr hindurch verlegt und in den Hohlraum eines die Energieversorgungseinheit integral aufweisenden Unterrohrs eingebracht werden kann, ohne dass es irgendwelche Umgebungseinflüssen ausgesetzt ist.

Bei einem erfindungsgemäßen Elektrofahrrad mit einem Fahrradrahmen mit mehreren Rahmenstreben, die zumindest ein Unterrohr, ein Sattelrohr und ein Lenkkopfrohr des Fahrradrahmens bilden, mit einem an einer Halteeinrichtung am Fahrradrahmen befestigten Elektromotor, mit wenigstens einer an einer Aufnahme am Fahrradrahmen angeordneten Energieversorgungseinheit für den Elektromotor und mit mehreren elektrischen Versorgungskabeln ist erfindungsgemäß vorgesehen, dass das Sattelrohr und/oder das Lenkkopfrohr mit einer Kammer als Kabelführungskanal versehen sind und dass wenigstens ein elektrisches Versorgungskabel im von der integrierten Kammer im Sattelrohr und/oder im Lenkkopfrohr gebildeten Kabelführungskanal verlegt ist.

Weitere Vorteile und Ausgestaltungen eines erfindungsgemäßen Fahrradrahmens für Elektrofahrräder ergeben sich aus der nachfolgenden Beschreibung von in der Zeichnung schematisch gezeigten Ausführungsbeispielen. In der Zeichnung zeigen:
- **Fig. 1**: in perspektivischer Ansicht einen erfindungsgemäßen Fahrradrahmen gemäß einem ersten Ausführungsbeispiel;
- **Fig. 2**: einen Horizontalschnitt durch den Fahrradrahmen aus Figur 1 im Bereich des Sattelrohrs und des Hinterbaus;
- **Fig. 3**: eine Detailansicht des Querschnittsprofils des Sattelrohrs aus Fig. 1;
- **Fig. 4**: einen Schnitt durch Ladebuchse und Sattelrohr;
- **Fig. 5**: in perspektivischer Ansicht einen erfindungsgemäßen Fahrradrahmen gemäß einem zweiten Ausführungsbeispiel;
- **Fig. 6**: eine schematische Detailansicht des Sattelrohres beim Fahrradrahmen in Figur 5;
- **Fig. 7**: eine Detailansicht des Lenkkopfrohres mit Unterrohr und Oberrohr des Fahrradrahmens aus Figur 5;
- **Fig. 8**: eine schematisch Detailansicht des beim Fahrradrahmen aus Figur 5 verbauten Lenkkopfrohrs; und
- **Fig. 9**: das Lenkkopfrohr aus Figur 8 im Horizontalschnitt.

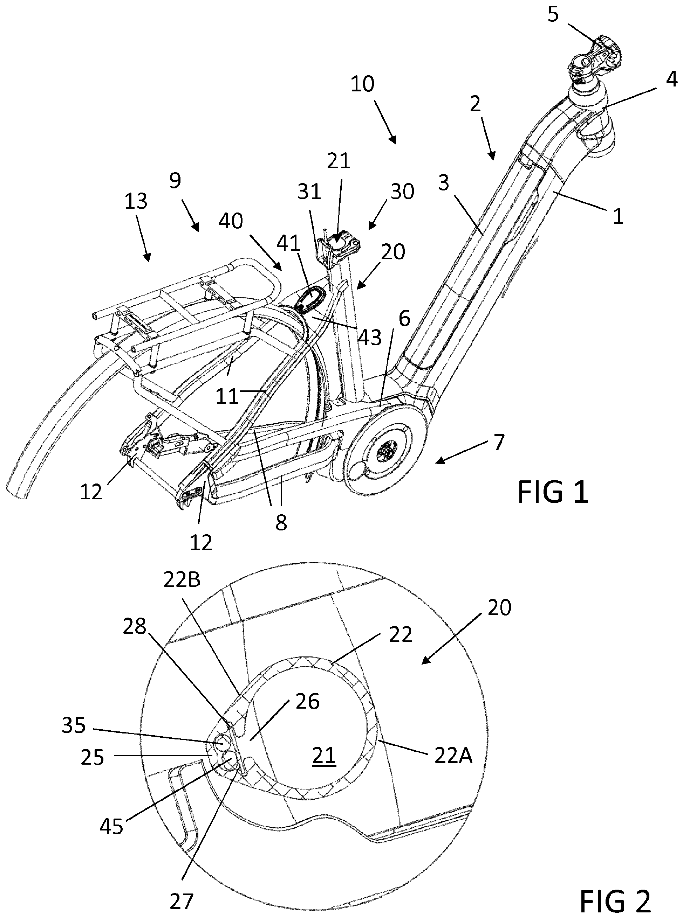

Figur 1 zeigt in perspektivischer Ansicht einen insgesamt mit Bezugszeichen 10 bezeichneten erfindungsgemäßen Fahrradrahmen für ein Elektrofahrrad gemäß einem ersten Ausführungsbeispiel. Der Fahrradrahmen 10 weist ein kräftiges, im Querschnitt annähernd rechteckförmiges Unterrohr 1 mit einer von oben zugänglichen Aufnahme 2 für eine von einem aufladbaren Akkumulatorpack gebildete Energieversorgungseinheit 3 auf, wobei am oberen Ende des Unterrohrs 1 ein Lenckopfrohr 4 befestigt ist, in welchem eine nicht weiter dargestellte Vorderradgabel mit ihrem Gabelschaft drehbar gelagert wird, wobei am Gabelschaft ein Vorbau 5 befestigt ist, über den ein nicht dargestellter Lenker mit dem Fahrradrahmen 10 verbunden werden kann. Am unteren Ende ist das Unterrohr 1 mit einem Motorstützelement 6 verbunden, an welchem der schematisch angedeutete Motor 7 aufgehängt ist und zugleich sowohl die Kettenstreben 8 des Hinterbaus 9 als auch ein Sattelrohr 20 mit einer Einschiebeöffnung 21 für die Sattelstange eines nicht dargestellten Sattels zur Anpassung der Sitzposition in unterschiedliche Tiefen eingeschoben werden kann. Zur Arretierung der Sitzposition dient eine Sattelklemme 30, die im gezeigten Ausführungsbeispiel mit einer Adapterplatte 31 zum Befestigen eines weiter nicht dargestellten Rücklichts an der Sattelklemme 30 versehen ist. Zum Hinterbau 9 gehören beim Fahrradrahmen 10 noch zwei Sitzstreben 11, die in an sich bekannter Weise über Ausfallenden 12 mit den beiden Kettenstreben 8 des Hinterbaus biegesteif verbunden sind. Im gezeigten Ausführungsbeispiel ist an den Sitzstreben 11 ferner noch ein Gepäckträger 13 abgestützt. Die Energieversorgungseinheit 3 ist über intern im Unterrohr 1 verlegte Kabel sowie lösbare Koppelelemente mit dem Elektromotor 7 verbunden, und der Benutzer eines mit dem Fahrradrahmen 10 versehenen Fahrrades erhält eine Trittunterstützung, solange er pedaliert.

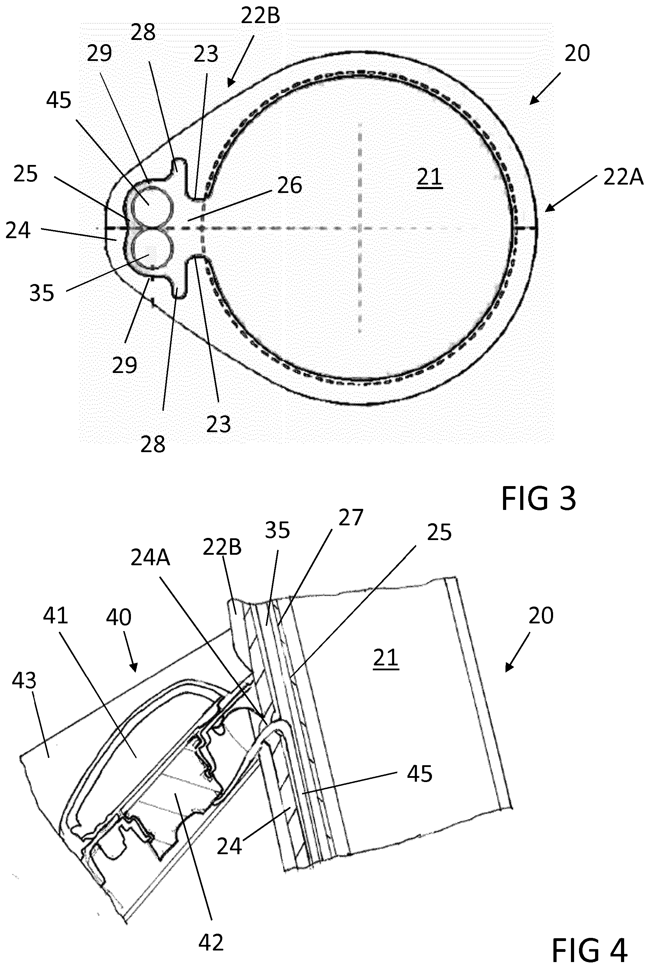

Die Energieversorgungseinheit 3 kann bei dem Fahrradrahmen 10 über eine Ladebuchse eines Ladeanschlusses 40 geladen werden, die unter einer als Schutz vor Umwelteinflüssen und insbesondere Feuchtigkeit dienenden Abdeckung 41 angeordnet ist und beim Fahrradrahmen 10 am Hinterbau 9 unmittelbar hinter dem Sattelrohr 20 (in Fahrrichtung betrachtet) positioniert ist. Die Abdeckung 41 des Ladeanschlusses 40 kann nach oben abgenommen werden, um in die darunter befindliche Ladebuchse (42, Figur 4) ein Ladekabel beispielsweise einer externen Ladestation einstecken zu können. Da der Ladeanschluss 40 mit der Ladebuchse 40 sehr weit oben positioniert ist und von oben zugänglich ist, kann der Benutzer ein Ladekabel in die Ladebuchse 42 des Ladeanschlusses 40 bequem einstecken, ohne sich bücken zu müssen. Der Ladeanschluss 40 wird mittels der Sitzstreben 11 am Hinterbau 9 abgestützt und kann beispielsweise ein Schmiedeteil 43 aufweisen, welches mit seinem vorderen Ende an der Rückseite des Sattelrohrs 20 und mit seinen hinteren Enden jeweils an einer der Sitzstreben 11 angeschweißt ist und die obere Befestigungsstelle des Hinterbaus 9 am Außenumfang des Sattelrohrs 20 bildet. Die intern im Schmiedeteil 43 angeordnete Ladebuchse 42 des Ladeanschlusses 40 ist über ein an die Energieversorgungseinheit 3 bzw. deren fahrradrahmenseitige Koppelelemente im Unterrohr 1 angeschlossen, wobei dieses Versorgungskabel über eine interne Kammer im Sattelrohr 20 verlegt ist. Auch das mit der Sattelklemme 30 verbindbare Rücklicht ist über ein Versorgungskabel an die Energieversorgungseinheit 3 oder einen mit dem Motor 7 verbundenen Generator elektrisch angeschlossen, wobei das Versorgungskabel für das Rücklicht ebenfalls über die interne Kammer im Sattelrohr 20 verlegt ist.

Die Figuren 2 und 3 verdeutlichen den Aufbau und das Konstruktionsprinzip des Sattelrohrs 20. Das Sattelrohr 20 umschließt in an sich bekannter Weise eine kreisrunde Einschiebeöffnung 21 für die mit dem Sattel verbundene Sattelstütze. Das Sattelrohr hat jedoch außen nahezu über seine gesamte Höhe einen vollständig geschlossenen Außenumfang 22, welcher, wie die Figuren 2 und 3 gut erkennen lassen, einen in Fahrrichtung weisenden halbkreisförmigen Wandabschnitt 22A und einen rückseitigen parabelförmigen Wandabschnitt 22B hat. Im Innern des Bereichs des Parabelabschnitts 22B des Sattelrohrs 20 verläuft parallel zur sich bis zum Boden des Sattelrohrs 20 erstreckenden Einschiebeöffnung 21 eine Kammer 25, die zwar nach außen, also zur Außenwand 22 des Sattelrohrs 20 geschlossen ist, aber zur Einschiebeöffnung 21 hin einen Durchbruch 26 hat, der sich über die gesamte Höhe des Sattelrohrs 20 erstreckt. Der Durchbruch 26 ist allerdings im Regelfall mittels eines Schließelementes 27, welches beispielsweise einteilig von einer Schiene oder mehrteilig von kurzen Schienenabschnitten gebildet werden kann, verschlossen, wobei das Schließelement 27 vom oberen Ende des Sattelrohrs 20 her in Schlitzeinziehungen 28 eingeschoben werden kann, die einander gegenüberliegend an inneren Seitenwänden 29 der Kammer 25 ausgebildet sind. Beim Querschnittsprofil des Sattelrohr 20 in den Figuren 2 und 3 bildet die Kammer 25 einen Hinterschnitt hinter dem Durchbruch 26, denn die beiden Seitenwände 29 weisen einen Abstand voneinander auf, der größer ist als der Abstand der Begrenzungswände 29A im Bereich des Durchbruchs 26. Die Schlitzeinziehungen 28 liegen unmittelbar angrenzend an den Durchbruch 26 bzw. dessen Begrenzungswände 29A. Die Abmessungen der Kammer 25 reichen aus, dass in der Kammer 25, parallel zur Einschiebeöffnung 21 für die Sattelstütze, allerdings von dieser getrennt, ein Versorgungskabel 35 für das Rücklicht und auch ein Ladekabel 45 zum Verbinden der Ladebuchse 42 des Ladeanschlusses 40 mit der Energieversorgungseinheit verlegt werden kann, ohne dass die Kabel von außen sichtbar sind oder Umwelteinflüssen ausgesetzt sind. Das Ladekabel 45 hat vorzugsweise einen ovalen Querschnitt, das Versorgungskabel für das Licht kann einen runden Querschnitt aufweisen, allerdings können die Querschnitte der Elektrokabel 35, 45 auch variieren, wie die Darstellung der beiden Elektrokabel 35,45 jeweils mit Rundquerschnitten in Figur 3 beispielhaft zeigt. Die Elektrokabel könnten auch rechteckige oder ovale Querschnitte aufweisen, solange die Querschnittsabmessungen der Elektrokabel in einer Richtung kleiner sind als die lichte Breite des Durchbruchs 26, mithin der Abstand zwischen dessen beiden Begrenzungswänden 29A.

Figur 4 verdeutlicht die elektrische Verbindung zwischen einer in der Schnittansicht nur angedeuteten Ladebuchse 42 und der Energieversorgungseinheit über das Kabel 45. In demjenigen Bereich, in welchem das den Ladeanschluss 40 mit der Ladebuchse 42 aufnehmende Schmiedeteil 43 am Außenumfang des parabelförmigen Wandabschnitts 22B des Sattelrohrs 20 angeschlossen ist, ist die Rückwand 24 der Kammer 25 mit einer Aussparung 24A versehen, durch welche das mit der Ladebuchse 42 verbundene Kabel 45 in die Kammer 25 hineingeführt ist, wobei die Aussparung 24A vorzugsweise eine Größe hat, die ausreicht, dass der am freien Kabelende befindliche Stecker durch die Aussparung 24A hindurchgeschoben werden kann. Das zweite in der Kammer 25 verlegte Elektrokabel 35 für das Rücklicht wird weiter nach oben zum oberen Ende des Sattelrohrs 20 innerhalb der Kammer 25 geführt. Die Schiene 27 kann oben aus der Kammer herausgeschoben werden, falls beispielsweise das Kabel 35 neu verlegt werden soll, um das Kabel 45 zu verlegen oder die Ladebuchse 42 auszutauschen. Der Querschnitt der Kammer 25 muss nur ausreichend bemessen sein, die Kabel 35,45 aufnehmen zu können, die Verlegung der Kabel 35,45 wird durch den Durchgang zur Einschiebeöffnung 21 für die Sattelstütze gewährleistet.

Damit die Sattelklemme 30 am Sattelrohr befestigt werden kann und die mit dem Sattel verbundene Sattelstütze festklemmen kann, kann das Sattelrohr 20 in einem oberen Abschnitt am Außenumfang derart abgedreht sein, dass die gesamte Kammer mit ihren Begrenzungswänden weggeschnitten ist und das Sattelrohr 20 mithin auf ein Rundrohr mit dem Durchbruch im rückwärtigen Teil reduziert ist; die Klemme kann dann unmittelbar auf die die Einschiebeöffnung 21 begrenzenden Seitenwände einwirken, um durch Verringerung des Abstandes der den Durchbruch 26 begrenzenden Seitenwände den Querschnitt der Einschiebeöffnung 21 des Sattelrohr 20 zu verringern und hierdurch die Sattelstütze fest zu verankern.

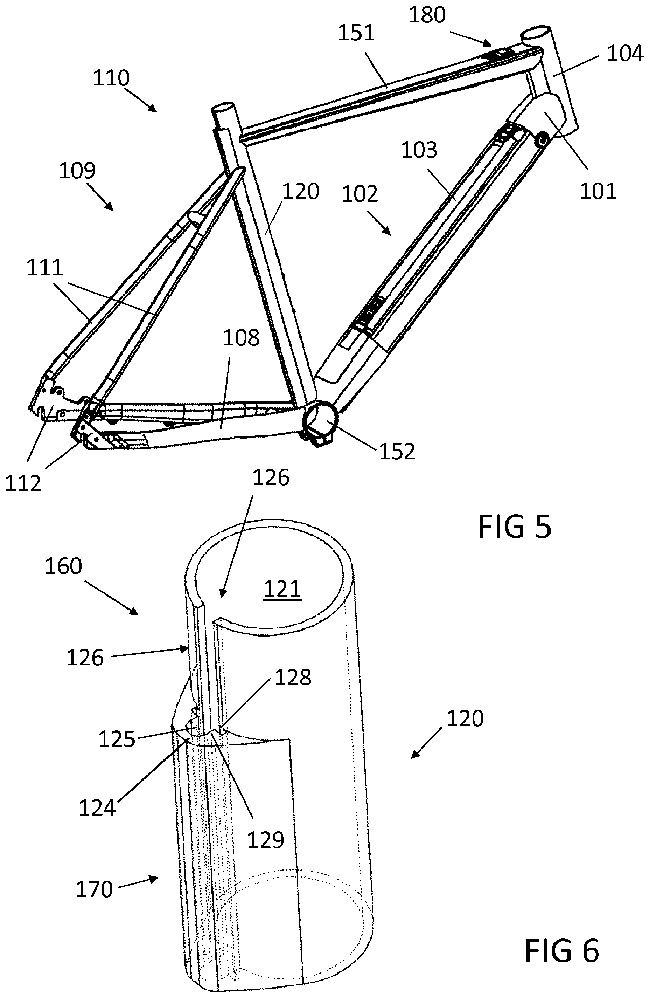

Die Figuren 5 bis 9 zeigen ein zweites Ausführungsbeispiel eines erfindungsgemäßen Fahrradrahmens 110. Beim Fahrradrahmen 110 handelt es sich um einen Trapez- oder Diamantrahmen mit Unterrohr 101, Lenckopfrohr 104, Oberrohr 151 und Sattelrohr 120, die fest miteinander verschweißt sind. An der Rückseite des Sattelrohrs 120 stützt sich wiederum ein Hinterbau 109 mit seinen Kettenstreben 108 sowie den Sitzstreben 111 ab, die über Ausfallenden 112 miteinander verbunden sind. Eine Energieversorgungseinheit 103 für einen weiter nicht dargestellten Elektromotor, der am Kurbelgehäuse 152 abgestützt werden kann, ist wiederum in einer Aufnahme 102 im Unterrohr 101 derart integriert aufgenommen, dass die Energieversorgungseinheit 103 optisch vollständig in das Unterrohr 101 integriert ist. Auch hier hat das Unterrohr 101 einen großvolumigen, rechteckförmigen Querschnitt, der im optischen Erscheinungsbild die Energieversorgungseinheit 3 vollständig im Unterrohr verschwinden lässt, sie mithin vollständig integriert.

Auch das Sattelrohr 120 beim Fahrradrahmen 110 hat, wie Figur 6 zeigt, eine sich über die gesamte Höhe des Sattelrohrs 120 erstreckende Einschiebeöffnung 121 für eine Sattelstütze. Parallel zu der Einschiebeöffnung 121 erstreckt sich im Sattelrohr 120 an dessen Rückseite annähernd über die gesamte Höhe eine Kammer 125 als interner Kabelführungskanal. Das Sattelrohr 120 ist, abgesehen vom obersten Abschnitt 160, wie noch erläutert werden wird, am Außenumfang geschlossen und die Kammer 150 ist in einer rückseitigen Ausbuchtung 170 des Sattelrohrs 120 ausgebildet, wobei die Ausbuchtung 170 vorzugsweise integraler Bestandteil des Sattelrohr 120 ist, die schon beim Urformen bzw. Herstellen des Sattelrohrs 120 erzeugt wird; das Sattelrohr 120 kann insbesondere als Stranggussprofil hergestellt sein. Die Kammer 125 ist zwar nach außen geschlossen, aber sie weist über ihre gesamte Höhe einen in die Einschiebeöffnung 121 mündenden Durchbruch 126 auf, wobei unmittelbar angrenzend an den Durchbruch 126 die Begrenzungswände 129 der Kammer 125 mit Einziehungen 128 versehen sind, um von oben, wie schon erläutert, ein Schließelement wie eine Schiene derart zwischen Kammer 125 und Durchbruch 126 einschieben zu können, dass die Kammer 125 nach Einziehen eines oder mehrerer Elektrokabel mittels des Schließelementes von der Einschiebeöffnung 121 getrennt ist. Es reicht ggf. auch aus, mehrere Schlie-ßelementstücke in die Einziehungen 128 einzuschieben, die dann dafür sorgen, dass das in der Kammer 125 verlegte Kabel sicher von der Einschiebeöffnung 121 getrennt ist. Abweichend vom vorherigen Ausführungsbeispiel bildet hier die Kammer 125 keine Hinterschneidung, sondern die beiden Seitenwände 129 erstrecken sich im Wesentlichen mit dem selben Abstand wie die lichte Weite (Abstand) am Durchbruch 126 bis zur Rückwand 124 der Kammer 125, wobei sämtliche Übergänge gerundet ausgebildet sind, insbesondere auch der Übergang der Seitenwände 129 in die diese verbindende Rückwand 124. Ausschließlich im oberen Abschnitt, wie in den Figuren 5 und 6 dargestellt, ist die die Kammer aufweisende Ausbuchtung 170 entfernt, insbesondere mechanisch im Wesentlichen bis auf einen die Einschiebeöffnung umgebenden Rundohrabschnitt abgedreht worden, um in diesem oberen Abschnitt 160 eine Sattelklemme anordnen zu können, mit der, wie schon erläutert, die Sattelstütze in der Einschiebeöffnung 121 des Sattelrohrs 120 arretiert werden kann.

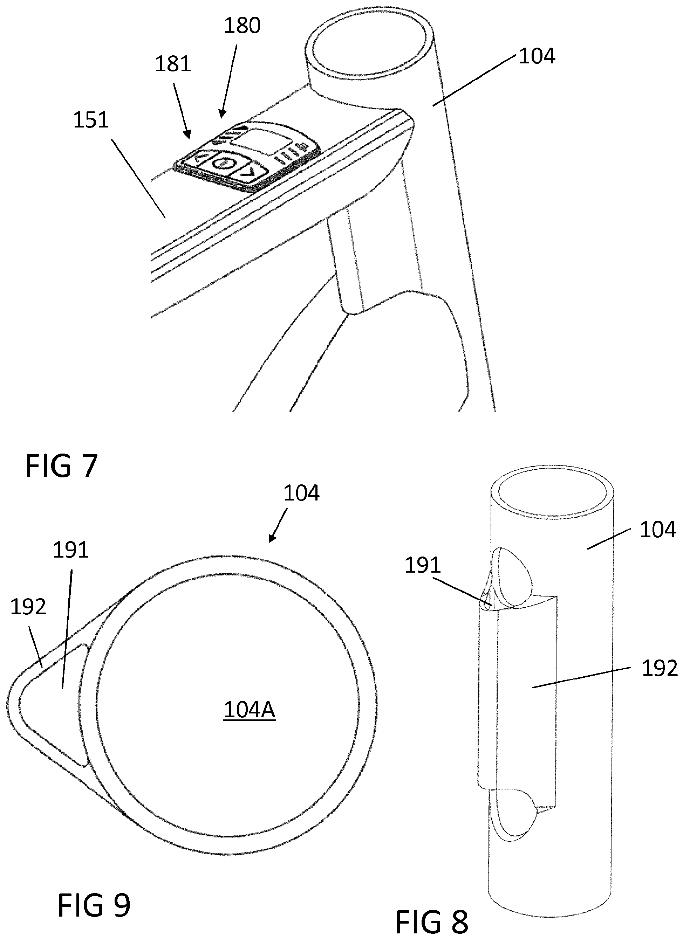

Als weitere Besonderheit ist der Fahrradrahmen 110 im Oberrohr 151 mit einem integrierten Display 180 bzw. einer Steuereinheit versehen, das von oben in eine Aussparung im Oberrohr 151 nahe des Lenckopfrohres 104 eingeschoben und dort positioniert ist. Im gezeigten Ausführungsbeispiel ist das Display 180 auch mit Bedientasten 181 versehen, um beispielsweise die Motorunterstützung durch den Elektromotor abzustellen oder die Trittkraftunterstützung zu erhöhen oder zu erniedrigen. Das Display 180 ist über ein Elektrokabel an die Motorsteuerung und/oder die internen Koppelelemente der Energieversorgungseinheit 103 angeschlossen, welches Elektrokabel wiederum intern im Fahrradrahmen 110 verlegt ist und von außen nicht sichtbar ist. Da bei dem als Trapezrahmen ausgebildeten Fahrradrahmen 110 das Unterrohr 101 und das Oberrohr 151 voneinander beabstandet am Lenckopfrohr 104 angeschweißt sind, wie vor allem Figur 7 gut erkennen lässt, ist das Lenkkopfrohr 104 partiell mit einer am Außenumfang geschlossenen, einen Kabelführungskanal bildenden Kammer 191 versehen, wozu ein annähernd V-förmiges Aufsatzstück 192 an der Rückseite des Lenkkopfrohrs 104 angeschweißt ist. Im Ergebnis ergibt sich annähernd dieselbe Profilform wie bei den zuvor beschriebenen Sattelrohren, allerdings besteht kein Durchbruch zwischen der Lageraufnahme 104A im Lenkkopfrohr 104 für den Gabelschaft und der den Kabelführungskanal bildenden Kammer 191 an der Rückseite des Lenkkopfrohrs 104.

Für den Fachmann ergeben sich aus der vorhergehenden Beschreibung zahlreiche Modifikationen, die in den Schutzbereich der anhängenden Ansprüche fallen sollen. Die Ladebuchse und/oder das Display sind nur beispielhafte Komponenten, die mittels der Versorgungskabel an die Elektrobatterie, die Motorsteuerung oder eine Koppelbuchse für die Elektrobatterie angeschlossen werden können. Auch für die Querschnittsform der jeweiligen Kammer ergeben sich zahlreiche Gestaltungsmöglichkeiten, soweit sichergestellt ist, dass der Querschnitt des Kabels ausreichend Platz in der Kammer findet. Im Regelfall ist die Energieversorgungseinheit aus ihrer Aufnahme herausnehmbar; bei Vorhandensein einer Ladebuchse, mit der die Energieversorgungseinheit im Einbauzustand geladen werden kann, ist dies aber nicht unbedingt erforderlich. Solche und weiteren Modifikationen sollen in den Schutzbereich der anhängenden Ansprüche fallen.

## Patentansprüche

1. Elektrofahrrad mit einem Fahrradrahmen mit mehreren Rahmenstreben, die zumindest ein Unterrohr, ein Sattelrohr und ein Lenkkopfrohr des Fahrradrahmens bilden, mit einer Halteeinrichtung für einen Elektromotor, mit wenigstens einer Aufnahme zur vorzugsweise lösbaren Anordnung einer Energieversorgungseinheit für den Elektromotor am Fahrradrahmen, wobei das Sattelrohr einen Außenumfang und innerhalb des Außenumfangs eine Einschiebeöffnung für eine Sattelstütze aufweist, und wobei das Sattelrohr (20; 120) eine am Außenumfang (22) geschlossene Kammer (25; 125) als Kabelführungskanal für wenigstens ein Elektrokabel aufweist, **dadurch gekennzeichnet, dass** das Sattelrohr eine integrierte Kammer als Kabelführungskanal aufweist, wobei der Kabelführungskanal mit einem sich entlang des Einschubraums für die Sattelstütze erstreckenden offenen Durchgang (26; 126) zur Einschiebeöffnung für die Sattelstütze versehen ist, und dass das Elektrokabel ein Versorgungskabel ist und mit wenigstens einem Stecker versehen ist, dessen Querschnitt größer ist als der Querschnitt der den Kabelführungskanal bildenden Kammer im Sattelrohr, wobei das Versorgungskabel wenigstens in einer Richtung eine Dicke hat, die kleiner ist als die lichte Breite des Durchgangs, und wobei das in der Kammer (25) im Sattelrohr (20) verlegte Versorgungskabel ein elektrisches Versorgungskabel für ein Rücklicht bildet und/oder als Versorgungskabel eine Ladebuchse mit der Energieversorgungseinheit verbindet.

2. Elektrofahrrad nach Anspruch 1, **dadurch gekennzeichnet, dass** der offenen Durchgang (26; 126) mit einem demontierbaren, ein- oder mehrteiligen Schließelement (27), insbesondere mit einer Schiene, verschließbar oder verschlossenen ist.

3. Elektrofahrrad nach Anspruch 1 oder 2, **dadurch gekennzeichnet, dass** der Außenumfang (22) des Sattelrohrs (20) an der vom Lenckopfrohr (4; 104) abgewandt liegenden Rückseite mit einer Ausbuchtung oder Verdickung versehen ist, in der die Kammer (25; 125) als integrierter Bestandteil des Sattelrohrs (20; 120) angeordnet und ausgebildet ist.

4. Elektrofahrrad nach einem der vorhergehenden Ansprüche, **dadurch gekennzeichnet, dass** das Sattelrohr (20) aus einem Profil, insbesondere Stranggussprofil, mit eiförmigem Außenumfang (22) besteht, welcher von einem in Fahrtrichtung weisenden halbkreisförmigen Wandabschnitt (22A) und einem rückseitigen parabelförmigen Wandabschnitt (22B) gebildet ist.

5. Elektrofahrrad nach Anspruch 4, **dadurch gekennzeichnet, dass** die den Kabelführungskanal bildende Kammer (25) im Bereich des rückseitigen parabelförmigen Wandabschnitts (22B) ausgebildet ist.

6. Elektrofahrrad nach einem der vorhergehenden Ansprüche, **dadurch gekennzeichnet, dass** die Kammer (25) aus einer Längsnut besteht, wobei vorzugsweise die Längsnut zwei einander im Wesentlichen parallel gegenüberliegende Seitenwände (29; 129) und eine diese verbindende Rückwand (24; 124) aufweist und die beiden Seitenwände (29; 129) der Längsnut im Abstand von der Rückwand und im Abstand von der Einschiebeöffnung (26; 126) mit Schlitzeinziehungen (28; 128) versehen sind, in die ein Schließelement (27) vom oberen Ende des Sattelrohr her einschiebbar ist.

7. Elektrofahrrad nach einem der vorhergehenden Ansprüche **dadurch gekennzeichnet, dass** die Kammer (25) einen gegenüber dem Durchgang (26) hinterschnittenen Kammerabschnitt aufweist, dessen Seitenwände (29) einen größeren Abstand voneinander aufweisen als die den Durchgang (26) seitlich begrenzenden Wandabschnitte (29A), wobei vorzugweise die Schlitzeinziehungen (28) für das Schließelement angrenzend an den Durchgang (26) ausgebildet sind.

8. Elektrofahrrad nach Anspruch 6 oder 7, **dadurch gekennzeichnet, dass** die Übergänge von der Begrenzungswandung der Einschiebeöffnung in die Seitenwände, die Übergänge von den Seitenwänden zu den Schlitzeinziehungen und die Übergänge von den Seitenwänden in die Rückwand gerundet ausgebildet sind.

9. Elektrofahrrad nach einem der vorhergehenden Ansprüche, **dadurch gekennzeichnet, dass** ein oberer Abschnitt (160) des Sattelrohrs (20) mit der Kammer derart abgetragen ist, dass das Sattelrohr im oberen Abschnitt einen Klemmbereich für eine Sattelklemme bildet, und vorzugsweise einen runden, die Einschiebeöffnung unmittelbar umgebenden, den Durchbruch als offenen Längsschlitz aufweisenden Außenumfangsabschnitt aufweist.

10. Elektrofahrrad nach einem der vorhergehenden Ansprüche, **dadurch gekennzeichnet, dass** ein Ladeanschluss (40) mit Ladebuchse (42) für die Energieversorgungseinheit rückseitig des Sattelrohrs (20) am Hinterbau (9) zwischen Sattelrohr (20) und Sitzstreben (11) angeordnet ist, wobei das die Ladebuchse (42) mit der Energieversorgungseinheit verbindende Versorgungskabel durch die Kammer (25) des Sattelrohrs (20) verlegt ist.

11. Elektrofahrrad nach einem der vorhergehenden Ansprüche, zusätzlich aufweisend ein Oberrohr (151), **dadurch gekennzeichnet, dass** das Oberrohr (151) beabstandet vom Unterrohr (101) am Lenkkopfrohr (104) befestigt ist, und dass das Lenkkopfrohr (104) eine am Außenumfang geschlossene Kammer (191) als internen Kabelführungskanal zwischen Unterrohr (101) und Oberrohr (151) aufweist.

12. Elektrofahrrad nach Anspruch 11, **dadurch gekennzeichnet, dass** das Oberrohr (151) integral mit einer Aufnahme für ein mit der Motorsteuerung über ein Kabel verbundenes Display versehen ist, wobei das Kabel intern im Fahrradrahmen durch den Kabelführungskanal (191) am Lenkkopfrohr (104) hindurch verlegt ist.

13. Elektrofahrrad nach einem der vorhergehenden Ansprüche mit mehreren Elektrokabeln, **dadurch gekennzeichnet, dass** wenigstens ein Elektrokabel im am Lenkkopfrohr (104) gebildeten Kabelführungskanal verlegt ist.

14. Elektrofahrrad nach einem der Ansprüche 1 bis 10, zusätzlich aufweisend ein Oberrohr, **dadurch gekennzeichnet, dass** das Oberrohr (151) integral mit einer Aufnahme für ein mit der Motorsteuerung über ein Kabel verbundenes Display versehen ist.

## Claims

1. Electric bicycle with a bicycle frame having several frame struts, which form at least a down tube, a seat tube, and a head tube of the bicycle frame, with a holding device for an electric motor, with at least one receptacle for the preferably detachable arrangement of a power supply unit for the electric motor on the bicycle frame, wherein the seat tube has an outer circumference and, within the outer circumference, an insertion opening for a seat post, and wherein the seat tube (20; 120) has a chamber (25; 125) closed at the outer circumference (22) as a cable guide channel for at least one electrical cable, **characterized in that** the seat tube has an integrated chamber as a cable guide channel, wherein the cable guide channel is provided with an open passage (26; 126) extending along the insertion opening for the seat post, and that the electrical cable is a supply cable and is provided with at least one plug whose cross-section is larger than the cross-section of the chamber in the seat tube forming the cable guide channel, wherein the supply cable has a thickness in at least one direction that is smaller than the clear width of the passage, and wherein the supply cable laid in the chamber (25) in the seat tube (20) forms an electrical supply cable for a rear light and/or connects a charging socket to the power supply unit as a supply cable.

2. Electric bicycle according to claim 1, **characterized in that** the open passage (26; 126) is closable or is closed with a removable, single-part or multi-part closing element (27), in particular with a rail.

3. Electric bicycle according to claim 1 or 2, **characterized in that** the outer circumference (22) of the seat tube (20) is provided with a bulge or thickening on the rear side facing away from the head tube (4; 104), in which the chamber (25; 125) is arranged and formed as an integral part of the seat tube (20; 120).

4. Electric bicycle according to one of the preceding claims, **characterized in that** the seat tube (20) consists of a profile, in particular a continuously cast profile, with an egg-shaped outer circumference (22), which is formed by a semicircular wall section (22A) pointing in the direction of travel and a parabolic wall section (22B) on the rear side.

5. Electric bicycle according to claim 4, **characterized in that** the chamber (25) forming the cable guide channel is formed in the area of the rear parabolic wall section (22B).

6. Electric bicycle according to one of the preceding claims, **characterized in that** the chamber (25) consists of a longitudinal groove, wherein the longitudinal groove preferably has two substantially parallel opposite side walls (29; 129) and a rear wall (24; 124) connecting them, and the two side walls (29; 129) of the longitudinal groove are provided with slot recesses (28; 128) at a distance from the rear wall and at a distance from the insertion opening (26; 126), into which a locking element (27) can be inserted from the upper end of the seat tube.

7. Electric bicycle according to one of the preceding claims, **characterized in that** the chamber (25) has a chamber section undercut relative to the passage (26), the side walls (29) of which are spaced further apart than the wall sections (29A) laterally delimiting the passage (26), wherein the slot recesses (28) for the locking element are preferably formed adjacent to the passage (26).

8. Electric bicycle according to claim 6 or 7, **characterized in that** the transitions from the boundary wall of the insertion opening to the side walls, the transitions from the side walls to the slot recesses, and the transitions from the side walls to the rear wall are round shaped.

9. Electric bicycle according to one of the preceding claims, **characterized in that** an upper section (160) of the seat tube (20) is removed from the chamber in such a way that the seat tube forms a clamping area for a seat clamp in the upper section and preferably has a round outer circumferential section directly surrounding the insertion opening and having the opening as an open longitudinal slot.

10. Electric bicycle according to one of the preceding claims, **characterized in that** a charging port (40) with a charging socket (42) for the power supply unit is arranged on the rear of the seat tube (20) on the rear frame (9) between the seat tube (20) and the seat struts (11), wherein the supply cable connecting the charging port (42) to the power supply unit is laid through the chamber (25) of the seat tube (20).

11. Electric bicycle according to one of the preceding claims, additionally comprising a top tube (151), **characterized in that** the top tube (151) is attached to the head tube (104) at a distance from the down tube (101), and **in that** the head tube (104) has a chamber (191) closed at the outer circumference as an internal cable guide channel between the down tube (101) and the top tube (151).

12. Electric bicycle according to claim 11, **characterized in that** the top tube (151) is integrally provided with a receptacle for a display connected to the motor control via a cable, wherein the cable is laid internally in the bicycle frame through the cable guide channel (191) on the head tube (104).

13. Electric bicycle according to one of the preceding claims with several electrical cables, **characterized in that** at least one electrical cable is laid in the cable guide channel formed in the head tube (104).

14. Electric bicycle according to one of claims 1 to 10, additionally comprising a top tube, **characterized in that** the top tube (151) is integrally provided with a receptacle for a display connected to the motor control via a cable.

## Revendications

1. Vélo électrique comprenant un cadre de vélo pourvu de plusieurs entretoises de cadre qui forment au moins un tube inférieur, un tube de selle et un tube de tête de direction du cadre de vélo, comprenant un dispositif de maintien pour un moteur électrique, comprenant au moins un logement pour la disposition de préférence amovible d'une unité d'alimentation en énergie pour le moteur électrique au niveau du cadre de vélo, le tube de selle présentant une circonférence extérieure et, à l'intérieur de la circonférence extérieure, une ouverture d'insertion pour un support de selle, et le tube de selle (20 ; 120) possédant une chambre (25 ; 125) fermée au niveau de la circonférence extérieure (22) en tant que canal de guidage de câble pour au moins un câble électrique, **caractérisé en ce que** le tube de selle possède une chambre intégrée en tant que canal de guidage de câble, le canal de guidage de câble étant pourvu d'un passage ouvert (26 ; 126) qui s'étend le long de l'espace d'insertion pour le support de selle, et **en ce que** le câble électrique est un câble d'alimentation et est muni d'au moins une fiche dont la section transversale est supérieure à la section transversale de la chambre formant le canal de guidage de câble dans le tube de selle, le câble d'alimentation ayant, au moins dans une direction, une épaisseur qui est inférieure à la largeur libre du passage, et le câble d'alimentation posé dans la chambre (25) dans le tube de selle (20) formant un câble d'alimentation électrique pour un feu arrière et/ou reliant, en tant que câble d'alimentation, une prise de charge à l'unité d'alimentation électrique.

2. Vélo électrique selon la revendication 1, **caractérisé en ce que** le passage ouvert (26 ; 126) peut être fermé ou est fermé par un élément de fermeture (27) démontable en une ou plusieurs parties, en particulier par un rail.

3. Vélo électrique selon la revendication 1 ou 2, **caractérisé en ce que** la circonférence extérieure (22) du tube de selle (20) est pourvue, sur le côté arrière qui se trouve à l'opposé du tube de tête de direction (4 ; 104), d'un renflement ou d'un épaississement dans lequel la chambre (25 ; 125) est disposée et formée en tant que partie intégrante du tube de selle (20 ; 120).

4. Vélo électrique selon l'une des revendications précédentes, **caractérisé en ce que** le tube de selle (20) se compose d'un profilé, notamment d'un profilé coulé en continu, avec une circonférence extérieure (22) de forme ovoïdale, qui est formée par une portion de paroi semi-circulaire (22A) orientée dans le sens de la marche et une portion de paroi parabolique (22B) du côté arrière.

5. Vélo électrique selon la revendication 4, **caractérisé en ce que** la chambre (25) qui forme le canal de guidage de câble est formée dans la zone de la portion de paroi parabolique (22B) côté arrière.

6. Vélo électrique selon l'une des revendications précédentes, **caractérisé en ce que** la chambre (25) se compose d'une rainure longitudinale, la rainure longitudinale possédant de préférence deux parois latérales (29 ; 129) opposées sensiblement parallèles l'une à l'autre et une paroi arrière (24 ; 124) qui relie celles-ci et les deux parois latérales (29 ; 129) de la rainure longitudinale sont pourvues, à distance de la paroi arrière et à distance de l'ouverture d'insertion (26 ; 126), de rétrécissements en forme de fentes (28 ; 128) dans lesquels peut être inséré un élément de fermeture (27) depuis l'extrémité supérieure du tube de selle.

7. Vélo électrique selon l'une des revendications précédentes, **caractérisé en ce que** la chambre (25) possède une portion de chambre en contre-dépouille par rapport au passage (26), dont les parois latérales (29) présentent un écart plus important entre elles que les portions de paroi (29A) qui délimitent latéralement le passage (26), les rétrécissements en forme de fente (28) pour l'élément de fermeture étant de préférence formés adjacents au passage (26).

8. Vélo électrique selon la revendication 6 ou 7, **caractérisé en ce que** les transitions de la paroi de délimitation de l'ouverture d'insertion aux parois latérales, les transitions des parois latérales aux rétrécissements en forme de fente et les transitions des parois latérales à la paroi arrière sont de configuration arrondie.

9. Vélo électrique selon l'une des revendications précédentes, **caractérisé en ce qu'**une portion supérieure (160) du tube de selle (20) avec la chambre est enlevée de telle sorte que le tube de selle forme, dans la portion supérieure, une zone de serrage pour un collier de selle et présente de préférence une portion de circonférence extérieure ronde, qui entoure directement l'ouverture d'insertion, présentant l'ouverture sous forme de fente longitudinale ouverte.

10. Vélo électrique selon l'une des revendications précédentes, **caractérisé en ce qu'**une borne de charge (40) dotée d'une douille de charge (42) pour l'unité d'alimentation en énergie est disposée du côté arrière du tube de selle (20) au niveau de la structure arrière (9) entre le tube de selle (20) et les entretoises de siège (11), le câble d'alimentation qui relie la douille de charge (42) à l'unité d'alimentation en énergie étant posé à travers la chambre (25) du tube de selle (20).

11. Vélo électrique selon l'une des revendications précédentes, possédant en plus un tube supérieur (151), **caractérisé en ce que** le tube supérieur (151) est fixé au tube de tête de direction (104) à distance du tube inférieur (101) et **en ce que** le tube de tête de direction (104) possède une chambre (191) fermée sur la circonférence extérieure en tant que canal de guidage de câble intérieur entre le tube inférieur (101) et le tube supérieur (151).

12. Vélo électrique selon la revendication 11, **caractérisé en ce que** le tube supérieur (151) est pourvu d'un seul tenant d'un logement pour un dispositif d'affichage relié à la commande de moteur par le biais d'un câble, le câble étant posé à l'intérieur du cadre de vélo à travers le canal de guidage de câble (191) au niveau du tube de tête de direction (104).

13. Vélo électrique selon l'une des revendications précédentes, comprenant plusieurs câbles électriques, **caractérisé en ce qu'**au moins un câble électrique est posé dans le canal de guidage de câble formé au niveau du tube de tête de direction (104).

14. Vélo électrique selon l'une des revendications 1 à 10, possédant en plus un tube supérieur, **caractérisé en ce que** le tube supérieur (151) est pourvu d'un seul tenant d'un logement pour un dispositif d'affichage relié à la commande de moteur par le biais d'un câble.
